# EUROPEAN PATENT SPECIFICATION

(11) **EP 4 177 036 B1**
(45) Date of publication and mention of the grant of the patent: **19.03.2025**
(21) Application number: 22020493.7
(22) Date of filing: 18.10.2022
(51) Int. Cl.: B29C 45/14, B29C 45/00

(54) **MODULAR ROBOTIC CO-MOULDING STATION**
MODULARE ROBOTER-COFORMSTATION
STATION DE CO-MOULAGE ROBOTIQUE MODULAIRE

(30) Priority: 03.11.2021 IT 202100028037
(43) Date of publication of application: 10.05.2023
(73) Proprietor: Sacel S.r.l., 10080 Ozegna (TO) (IT)
(72) Inventor: Moglia, Andrea, 10080 Ozegna (TO) (IT)
(74) Representative: Garavelli, Paolo

(56) References cited:
- WO-A1-2020/041886
- CN-A- 110 228 162
- US-B1- 6 523 907

## Description

The present invention refers to a modular robotic co-moulding station, in accordance with the preamble of claim 1. In particular, a modular, compact and automated robotic co-moulding station, is shown, capable of producing semi-finished products of variable dimensions, by carrying out various types of assembly and processing on them.

The process of plastic co-moulding or plastic injection co-moulding is the mechanical process aimed at obtaining a finished product consisting of different plastic materials "fused" with embedded materials or with metals.

This technology finds application in the production of pieces in polymer (commonly defined as plastic) with some structural and electrical characteristics that plastic cannot guarantee. The process makes use of high mechanical and micrometric efficiency presses necessary to carry out the metal-plastic co-moulding: it is therefore possible to incorporate any type of metal that can be used for different applications in a solid plastic.

The use of this moulding process combines the versatile shapes and lightness of plastic with the solid capabilities of metal. The role of metal is, depending on the case, for example, to structure the object, maintaining its lightness and shape or, in the case of copper, bronze or brass details, to improve its electrical characteristics; the result is fast processing, which reduces production costs and optimizes production times, in order to always respect the needs expressed by customers.

Many co-moulding systems are known in the art, such as document US7854876 relating to a system of moulds for modular preforms that allows for flexible, low-cost, high-volume and highly adaptable production capabilities (capable of producing a variety of sizes, shapes and volumes, simultaneously or in sequence), or document JP2021045876, relating to a method for displaying a moulded product of the injection moulding system by which information on a moulded product can be easily obtained, such as any manufacturing defects, or document US6613262 relating to a moulding machine consisting of a base, a fixed support of the plate mounted in a movable manner with respect to the base, and of the movable plates, and also document US5075051 relating to a moulding apparatus which uses several moulds in succession through a step of raising the temperature, a step of printing injection page, a step of pressurized cooling and a step of removing the moulded article.

The main disadvantage of the prior art concerns co-moulding systems in which the interchangeability concerns only parts of the mould for the injection of the plastic material (there is no real moulding station that contains the areas for choosing the mould, of moulding, carrying out various assemblies and processes and quality control) and in some cases, despite being a modular system, it is only so for two types of moulds, without the possibility of being able to vary the type of pieces produced according to size.

Documents US-B1-6 523 907 and CN-A-110 228 162 describe modular robotic stations according to the preamble of Claim 1.

Object of the present invention is solving the aforementioned prior art problems by means of a modular robotic co-moulding station, capable of providing a range of semi-finished products that vary from the point of view of the size on which further assembly and processing operations of the products can be carried out.

A further object of the invention is providing a station as described above, equipped with a quality control system integrated into the production station.

The above and other objects and advantages of the invention, as will emerge from the following description, are achieved with a modular robotic co-moulding station such as that described in claim 1. Preferred embodiments and non-trivial variants of the present invention form the subject matter of the dependent claims.

It is understood that all attached claims form an integral part of the present description.

It will be immediately obvious that innumerable variations and modifications (for example relating to shape, dimensions, arrangements and parts with equivalent functionality) can be made to what is described, without departing from the scope of the invention as appears from the attached claims.

The present invention will be better described by some preferred embodiments, provided by way of non-limiting example, with reference to the attached drawings, in which:
- FIG. 1 shows the modular robotic co-moulding station (100) according to the present invention; and
- Fig. 2 shows the modular robotic co-moulding station (100) with the connection of the operating modules and control systems, according to the present invention.

The modular robotic co-moulding station (100) of the present invention is designed to make semi-finished and finished products by injecting thermoplastic material into the mould that incorporates metal inserts, typically for the production of electrical connectors, power circuits or complex-shaped plastic components with metal inserts; it is divided into three main areas consisting of an initial preparation and control of the inserts, an intermediate area where the thermoplastic material is injected through a press and a mould and finally a final area dedicated to any accessory assembly and processing operation, or to the testing of high-volume production of components.

The modular robotic co-moulding station (100) consists of a modular connection device (101), designed to manage different modules (105) for the production and realization of specific components, a vertical injection press (102), necessary to inject the material at high pressure into a mould, a handling and control system (103) designed for the handling of semi-finished components and for quality control and, optionally, at least one final preparation system (104), designed to carry out cleaning and packaging operations of the produced components.

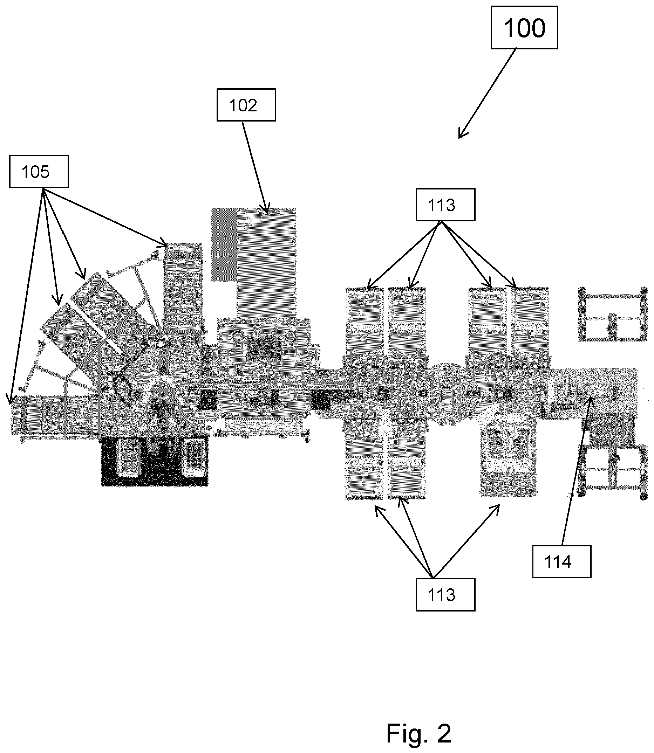

Advantageously, as can be seen from the figures, a first modular connection device (101) is connected upstream to the vertical injection press (102), in turn connected downstream to the movement and control system (103) which leads to a series of second modular connection devices (101) adapted to receive (as shown in Figure 2) assembly / processing and control modules (113).

The first modular connection device (101) is equipped with a mechanical electro-pneumatic connection system (107) and completely autonomous software: this connection system (107) is able to guarantee a standardized connection of the modules (105) in the first modular connection device (101).

The modules (105) of the modular robotic co-moulding station (100) are semi-machines designed to perform specific operations in the production process of the modular robotic co-moulding station (100), i.e. processing operations necessary for the transformation of the component to be produced and control operations to verify the quality of the produced components.

Currently, the following modules have been developed, which are obviously exemplary of the possible assembly and machining operations that can be carried out by the inventive system (100):
- Circuit driving module with NC control of the force/stroke ratio
- Press module for blanking circuits from reel
- Bushing interlocking and driving module
- Module for separating electrical tracks
- Control module for micro-leaks under pressure with helium.

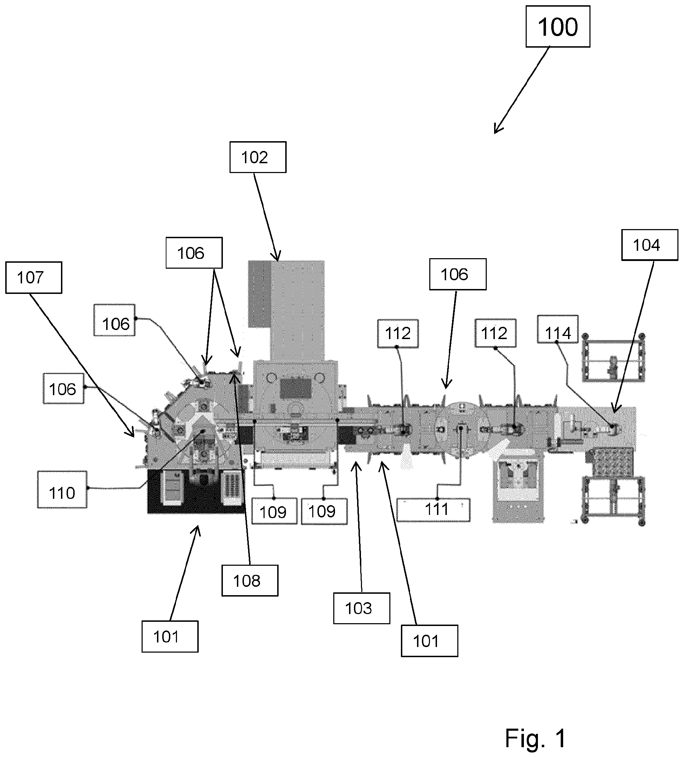

The modular connection devices (101), connected to the vertical injection moulding machine (102), are equipped with mechanical reference systems (106) to ensure the correct positioning, and the correct accuracy of the modules (105) in the modular connection device (101): these mechanical reference systems (106) are necessary to ensure the repeatability and accuracy of the positioning of the modules (105, 113) in the modular connection device (101), as shown in Figure 1.

Furthermore, the modular connection devices (101) are equipped with an electro-pneumatic connection by means of a set of actuators (108) necessary for the connection of compressed air lines, electrical safety signals (interlock), electrical voltage and Ethernet connection of the modules (105) in the modular connection devices (101), as shown in Figure 1.

Advantageously, the modular connection devices (101) are also provided with a software interconnection through which the autonomous Programmable Logic Controllers (PLC) of the modules (105) initiate a communication connection via an Ethernet protocol with the Programmable Logic Controllers (PLC) of the modular connection devices (101), as shown in Figure 1.

In addition, the first modular connection device (101) is provided with a rotating loading table (110) necessary for the handling of the semi-finished components: this rotating loading table (110) is connected to the first modular connection device (101), as can be seen from Figure 1.

The modular robotic co-moulding station (100) also includes a vertical injection press (102) capable of processing thermoplastic materials with the aid of metal inserts: this vertical injection press (102) is equipped with translating devices (109) necessary for handling the semi-finished components, and is connected to the modular connection device (101) and to the handling and control system (103), as shown in Figure 1.

Advantageously, the modular robotic co-moulding station (100) is equipped with a handling and control system (103), connected to the vertical injection press (102) and to the final preparation system (104), and consisting of a rotating loading table (111) and at least two anthropomorphic robots (112); the rotating loading table (111) and the anthropomorphic robots (112) are necessary for handling operations and for the handling of the semi-finished components.

Furthermore, the handling and control system (103) is operationally connected to a set of assembly/processing and control modules (113) necessary to carry out any further assembly and / or processing operations and to check the quality of the components produced. The assembly / processing and control modules (113) are connected to the movement and control system (103) by means of a completely autonomous electro-pneumatic mechanical connection system and software, as shown in Figure 2.

The modular robotic co-moulding station (100) is optionally equipped with at least one final preparation system (104), connected to the handling and control system (103), and includes an anthropomorphic robot (114) necessary for the cleaning and packaging operations of the components produced, as shown in Figure 2.

The modularity of the modular robotic co-moulding station (100) is an innovative aspect also in its software: the modular robotic co-moulding station (100) is managed by a network of PLCs connected with an Ethernet communication protocol.

Each single module (105, 113) is equipped with an autonomous PLC able to connect with the PLC of the fixed part; since the specific programming of the module (105, 113) is contained in it, it is not necessary to change the programming of the fixed part when connecting the module (105, 113) itself. In particular, it is not necessary to review the basic programming of an island even when connecting a newly built module.

Programming is strongly oriented towards modularity and aims to minimize the reconfiguration times of the machine from one production to another.

In summary, the modular robotic co-moulding station (100) of the invention comprises:
- at least one first modular connection device (101), designed to be operationally connected to and to manage at least one module (105) for the production and construction of specific components;
- a vertical injection press (102), necessary to inject material at high pressure into a mould and operatively connected to the at least one first modular connection device (101);
- a movement and control system (103) designed for the handling and control of semi-finished components, operationally connected to the vertical injection press (102); and
- at least one second modular connection device (101), designed to be operationally connected to and to manage at least one module (113) for carrying out any assembly, machining and control operations on the components;
wherein the modular connection devices (101) are provided with a completely autonomous mechanical electro-pneumatic and software connection system (107), the connection system (107) able to guarantee a standardized connection of the modules (105) in the modular connection devices (101). The invention is set out in the appended set of claims.

## Claims

1. Modular robotic co-moulding station (100) comprising:
- at least one first modular connection device (101), designed to be operationally connected to and to manage at least one module (105) for the production and construction of specific components;
- a vertical injection press (102), necessary to inject material at high pressure into a mould and operatively connected to said at least one first modular connection device (101);
- a movement and control system (103) designed for the handling and control of semi-finished components, operationally connected to said vertical injection press (102); and
- at least one second modular connection device (101), designed to be operationally connected to and to manage at least one module (113) for carrying out any assembly, machining and control operations on the components;
**characterized in that** said modular connection devices (101) are provided with a completely autonomous mechanical electro-pneumatic and software connection system (107), said connection system (107) able to guarantee a standardized connection of said modules (105) in said modular connection devices (101).

2. Modular robotic co-moulding station (100) according to claim 1, **characterized in that** it further comprises at least one final preparation system (104), operatively connected to said movement and control system (103), and designed to carry out cleaning and packaging of the produced components.

3. Modular robotic co-moulding station (100) according to claim 1 or 2, **characterized in that** said modular connection devices (101) are provided with mechanical reference systems (106) able to guarantee the correct positioning of said modules (105, 113) in said modular connection devices (101).

4. Modular robotic co-moulding station (100) according to any one of the preceding claims, **characterized in that** said modular connection devices (101) are provided with an electro-pneumatic connection by means of a set of actuators (108) necessary for the connection of compressed air lines, electrical safety signals (interlock), electrical voltage and Ethernet connection of said modules (105, 113) in said modular connection devices (101).

5. Modular robotic co-moulding station (100) according to any one of the preceding claims, **characterized in that** said modular connection devices (101) are provided with a software interconnection by means of which autonomous Programmable Logic Controllers, PLCs, of said modules (105, 113) initiate a communication connection via Ethernet protocol with Programmable Logic Controllers, PLCs, of said modular connection devices (101).

6. Modular robotic co-moulding station (100) according to any one of the preceding claims, **characterized in that** said first modular connection device (101) is provided with a rotating loading table (110) necessary for handling the semi-finished components.

7. Modular robotic co-moulding station (100) according to any one of the preceding claims, **characterized in that** said vertical injection press (102) is designed to perform machining on thermoplastic materials with the aid of metal inserts, said press vertical injection (102) being provided with translating devices (109) necessary for handling the semi-finished components.

8. Modular robotic co-moulding station (100) according to any one of the preceding claims, **characterized in that** said movement and control system (103) comprises a rotating loading table (111) and at least two anthropomorphic robots (112), said rotating loading table (111) and said anthropomorphic robots (112) being designed to carry out handling operations and for the manipulation of the semi-finished components.

9. Modular robotic co-moulding station (100) according to any one of the preceding claims, **characterized in that** said movement and control system (103) is operationally connected to said assembly/processing and control modules (105, 113) by means of an electro-pneumatic mechanical connection system and completely autonomous software.

10. Modular robotic co-moulding station (100) according to any one of the preceding claims, **characterized in that** said final preparation system (104) comprises an anthropomorphic robot (114) necessary for the cleaning and packing operations of the produced components.

## Patentansprüche

1. Modulare Roboter-Co-Molding-Station (100), einschließlich:
- mindestens eine erste modulare Verbindungsvorrichtung (101), die dazu bestimmt ist, betriebsmäßig mit mindestens einem Modul (105) für die Produktion und Erstellung spezifischer Komponenten verbunden zu werden und dieses zu verwalten;
- eine vertikale Spritzpresse (102), die zum Einspritzen von Material unter hohem Druck in eine Form erforderlich ist und betriebsmäßig mit der mindestens einen ersten modularen Verbindungsvorrichtung (101) verbunden ist;
- ein Handhabungs- und Steuerungssystem (103), das für die Handhabung und Steuerung halbfertiger Komponenten ausgelegt ist und betriebsmäßig mit der vertikalen Spritzpresse (102) verbunden ist; und
- mindestens eine zweite modulare Verbindungsvorrichtung (101), die dafür ausgelegt ist, betriebsmäßig mit mindestens einem Modul (113) verbunden zu werden und dieses zu verwalten, um jegliche Montage-, Bearbeitungs- und Kontrollvorgänge an den Komponenten durchzuführen;
**dadurch gekennzeichnet, dass** die modularen Verbindungsvorrichtungen (101) mit einem völlig autonomen mechanischen, elektropneumatischen und softwaremäßigen Verbindungssystem (107) ausgestattet sind, wobei das Verbindungssystem (107) dazu ausgelegt ist, eine standardisierte Verbindung der Module (105) zu gewährleisten besagte modulare Verbindungsvorrichtungen (101).

2. Modulare Roboter-Co-Molding-Station (100) nach Anspruch 1, **dadurch gekennzeichnet, dass** sie außerdem mindestens ein Endvorbereitungssystem (104) umfasst, das operativ mit dem Bewegungs- und Steuersystem (103) verbunden und zum Tragen ausgelegt ist Wir führen Reinigungs- und Verpackungsarbeiten für die produzierten Komponenten durch.

3. Modulare Roboter-Co-Molding-Station (100) nach Anspruch 1 oder 2, **dadurch gekennzeichnet, dass** die modularen Verbindungsvorrichtungen (101) mit mechanischen Referenzsystemen (106) ausgestattet sind, die geeignet sind, die korrekte Positionierung der Module (105, 113) zu gewährleisten, in den modularen Anschlussvorrichtungen (101).

4. Modulare Roboter-Co-Molding-Station (100) nach einem der vorhergehenden Ansprüche, **dadurch gekennzeichnet, dass** die modularen Verbindungsvorrichtungen (101) mit einer elektropneumatischen Verbindung mittels eines Satzes von Aktuatoren (108) ausgestattet sind, die dafür erforderlich sind Anschluss von Druckluftleitungen, elektrischen Sicherheitssignalen (Interlock), elektrischer Spannung und Ethernet-Anschluss der Module (105, 113) in den modularen Anschlussgeräten (101).

5. Modulare Roboter-Co-Molding-Station (100) nach einem der vorhergehenden Ansprüche, **dadurch gekennzeichnet, dass** die modularen Verbindungsgeräte (101) mit einer Softwareverbindung ausgestattet sind, über die speicherprogrammierbare Steuerungen, SPS, unabhängig von den Modulen (105, 113) eine Kommunikationsverbindung über das Ethernet-Protokoll mit speicherprogrammierbaren Steuerungen, SPS, der modularen Verbindungsgeräte (101) starten.

6. Modulare Roboter-Co-Molding-Station (100) nach einem der vorhergehenden Ansprüche, **dadurch gekennzeichnet, dass** die erste modulare Verbindungsvorrichtung (101) mit einem rotierenden Ladetisch (110) ausgestattet ist, der für die Handhabung der halbfertigen Komponenten erforderlich ist.

7. Modulare Roboter-Co-Molding-Station (100) nach einem der vorhergehenden Ansprüche, **dadurch gekennzeichnet, dass** die vertikale Spritzgusspresse (102) für die Bearbeitung thermoplastischer Materialien mit Hilfe von Metalleinsätzen ausgelegt ist, wobei die Presse vertikales Spritzgießen ausführt (102) mit zur Handhabung der halbfertigen Bauteile notwendigen Translationseinrichtungen (109) versehen ist.

8. Modulare Roboter-Co-Molding-Station (100) nach einem der vorhergehenden Ansprüche, **dadurch gekennzeichnet, dass** das Bewegungs- und Steuersystem (103) einen rotierenden Ladetisch (111) und mindestens zwei rotierende anthropomorphe Roboter (112) umfasst Der Ladetisch (111) und die anthropomorphen Roboter (112) sind für die Durchführung von Handhabungsvorgängen und die Manipulation von halbfertigen Bauteilen ausgelegt.

9. Modulare Roboter-Co-Molding-Station (100) nach einem der vorhergehenden Ansprüche, **dadurch gekennzeichnet, dass** das Bewegungs- und Steuerungssystem (103) durch eine völlig autonome Betriebsverbindung mit den Montage-/Verarbeitungs- und Steuerungsmodulen (105, 113) verbunden ist elektropneumatisches mechanisches Verbindungssystem und Software.

10. Modulare Roboter-Co-Molding-Station (100) nach einem der vorhergehenden Ansprüche, **dadurch gekennzeichnet, dass** das Endvorbereitungssystem (104) einen anthropomorphen Roboter (114) umfasst, der für die Reinigungs- und Verpackungsvorgänge der hergestellten Komponenten erforderlich ist.

## Revendications

1. Station de co-moulage robotisée modulaire (100) comprenant:
- au moins un premier dispositif de connexion modulaire (101), conçu pour être connecté opérationnellement et gérer au moins un module (105) de production et de création de composants spécifiques;
- une presse à injection verticale (102), nécessaire pour injecter du matériau à haute pression dans un moule et connectée fonctionnellement audit au moins un premier dispositif de connexion modulaire (101);
- un système de manipulation et de contrôle (103) conçu pour la manipulation et le contrôle de composants semi-finis, connecté opérationnellement à ladite presse à injection verticale (102); et
- au moins un deuxième dispositif de connexion modulaire (101), conçu pour être connecté opérationnellement à et gérer au moins un module (113) pour réaliser toute opération d'assemblage, de traitement et de contrôle des composants;
**caractérisé par le fait que** lesdits dispositifs de connexion modulaires (101) sont dotés d'un système de connexion mécanique, électropneumatique et logiciel (107) totalement autonome, ledit système de connexion (107) étant conçu pour garantir une connexion standardisée desdits modules (105) dans lesdits dispositifs de connexion modulaires (101).

2. Station robotisée modulaire de co-moulage (100) selon la revendication 1, **caractérisée par le fait qu'**elle comprend également au moins un système de préparation finale (104), relié opérationnellement audit système de déplacement et de contrôle (103), et conçu pour transporter effectuer les opérations de nettoyage et de conditionnement des composants produits.

3. Station de co-moulage robotisée modulaire (100) selon la revendication 1 ou 2, **caractérisée par le fait que** lesdits dispositifs de connexion modulaires (101) sont munis de systèmes de référence mécaniques (106) adaptés pour garantir le bon positionnement desdits modules (105, 113) dans lesdits dispositifs de connexion modulaires (101).

4. Station de co-moulage robotisée modulaire (100) selon l'une quelconque des revendications précédentes, **caractérisée en ce que** lesdits dispositifs de connexion modulaires (101) sont munis d'une connexion électropneumatique au moyen d'un ensemble d'actionneurs (108) nécessaires au connexion des conduites d'air comprimé, signaux électriques de sécurité (interlock), tension électrique et connexion Ethernet desdits modules (105, 113) dans lesdits dispositifs de connexion modulaires (101).

5. Station de co-moulage robotisée modulaire (100) selon l'une quelconque des revendications précédentes, **caractérisée en ce que** lesdits dispositifs de connexion modulaires (101) sont pourvus d'une interconnexion logicielle par l'intermédiaire de laquelle des automates programmables, automates, autonomes desdits modules (105, 113) démarrer une connexion de communication via le protocole Ethernet avec des automates programmables, PLC, desdits dispositifs de connexion modulaires (101).

6. Station de co-moulage robotisée modulaire (100) selon l'une quelconque des revendications précédentes, **caractérisée en ce que** ledit premier dispositif de connexion modulaire (101) est muni d'une table de chargement rotative (110) nécessaire à la manipulation des composants semi-finis.

7. Station de co-moulage robotisée modulaire (100) selon l'une quelconque des revendications précédentes, **caractérisée en ce que** ladite presse à injection verticale (102) est conçue pour réaliser des transformations sur des matières thermoplastiques à l'aide d'inserts métalliques, ladite presse de moulage par injection verticale (102) étant muni de dispositifs de translation (109) nécessaires à la manipulation des composants semi-finis.

8. Station de co-moulage robotisée modulaire (100) selon l'une quelconque des revendications précédentes, **caractérisée en ce que** ledit système de déplacement et de contrôle (103) comprend une table de chargement rotative (111) et au moins deux robots anthropomorphes (112), ledit table de chargement (111) et lesdits robots anthropomorphes (112) étant conçus pour effectuer des opérations de manutention et pour la manipulation de composants semi-finis.

9. Station de co-moulage robotisée modulaire (100) selon l'une quelconque des revendications précédentes, **caractérisée en ce que** ledit système de déplacement et de contrôle (103) est connecté opérationnellement auxdits modules d'assemblage/traitement et de contrôle (105, 113) par un système complètement autonome. système de connexion mécanique électropneumatique et logiciel.

10. Station de co-moulage robotisée modulaire (100) selon l'une quelconque des revendications précédentes, **caractérisée en ce que** ledit système de préparation finale (104) comprend un robot anthropomorphe (114) nécessaire aux opérations de nettoyage et de conditionnement des composants produits.
